# EUROPEAN PATENT SPECIFICATION

(11) **EP 3 150 870 B1**
(45) Date of publication and mention of the grant of the patent: **25.04.2018**
(21) Application number: 15187653.9
(22) Date of filing: 30.09.2015
(51) Int. Cl.: F16B 35/06

(54) **SCREW**
SCHRAUBE
VIS

(43) Date of publication of application: 05.04.2017
(73) Proprietor: Hsu, Hung-I, Kaohsiung City 822 (TW)
(72) Inventor: Hsu, Hung-I, Kaohsiung City 822 (TW)
(74) Representative: Cabinet Chaillot

(56) References cited:
- GB-A- 2 314 133
- US-A- 5 683 217

## Description

### BACKGROUND OF THE INVENTION

### 1. Field of the Invention

This invention relates to a fastener and relates particularly to a screw which reduces the drilling resistance and enhances the fastening stability.

### 2. Description of the Related Art

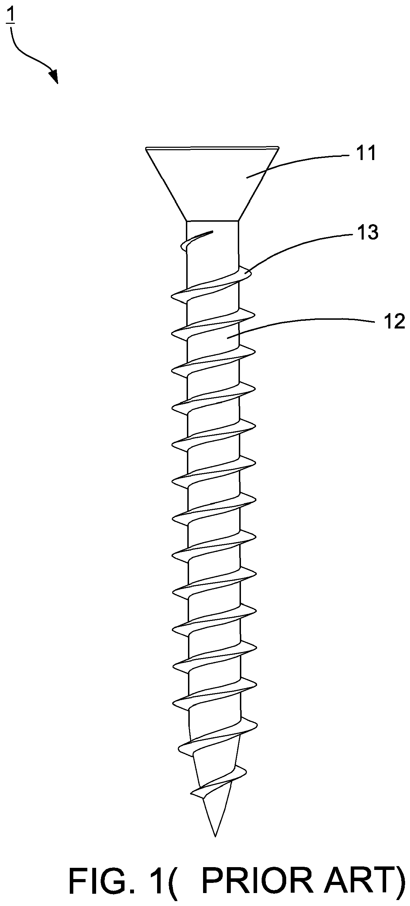

Referring to Fig. **1****,** a conventional screw **1** comprises a head **11,** a shank **12** extending downwards from the head **11** and a helix **13** spirally disposed around the shank **12.** This screw **1** is mainly used for a wooden workpiece (not shown). In use, wood fibers are cut into debris by the helix **13** and accumulated in interstices between the helix **13.** Concurrently, the shank **12** keeps moving downwards under the rotating force exerted on the head **11** until the head **11** comes into contact with the workpiece. Thus, a complete drilling action for positioning the workpiece is done.

However, the smooth helical structure of the helix **13** cannot sever the wood fibers efficiently during the cutting process. Specifically, the helix **13** can only enter the workpiece by pushing and displacing the fibers when the shank **12** keeps drilling into the workpiece. This action makes the helix **13** and the shank **12** entangled in the fibers easily and causes the large resistance which requires more labor. When more labor is needed, the screw **1** bears more torque during the drilling action. The overlarge torque may cause the screw **1** to snap before the drilling action is completed. This causes an inconvenient use, increases the operating time and decreases the fastening efficiency.

When the head **11** touches the workpiece, the head **11** can only press or push the cut debris toward the workpiece but cannot cut or accommodate the debris . Therefore, the over accumulation of cut debris may easily break the workpiece surface, and even the pushing behavior between the debris may cause the workpiece to split or crack. These problems render the head **11** unable to be in close contact with the workpiece and cause a poor fastening effect.

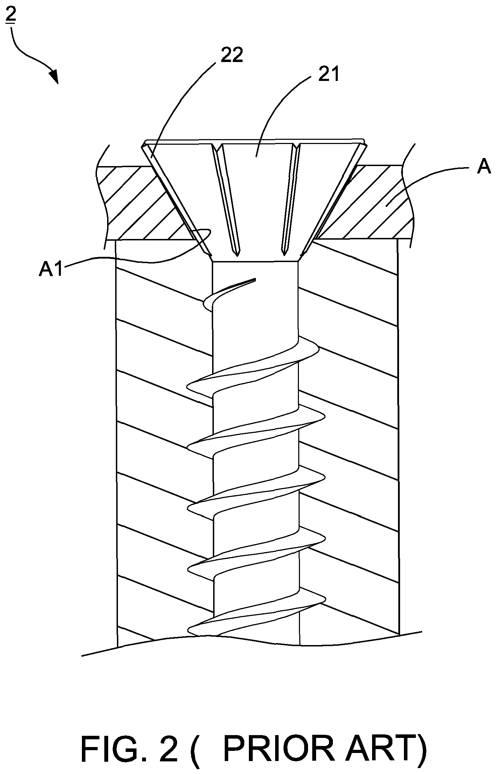

Referring to Fig. **2****,** a further screw **2** mainly provides a plurality of spaced-apart ribs **22** arranged on an underside of a head **21.** The ribs **22** cut wood fibers and allow the head **21** to enter a wooden workpiece (not shown) . If the screw **2** enter an iron workpiece **A** with a pre-drilled hole **A1** for fastening, the ribs **22** in contact with the iron workpiece **A** raises the head **21** and forms interstices between the ribs **22** and between the ribs **22** and the iron workpiece **A.** This situation renders the head **21** unable to fit flush with the hole **A1.** Thus, the screw **2** still has a poor fastening effect.

US 5 683 217 A and GB 2 314 133 A disclose a self-countersinking screw according to the preamble of claim 1.

### SUMMARY OF THE INVENTION

An object of this invention is to provide a screw which reduces the drilling resistance and enhances the fastening stability.

The screw of this invention is as defined in claim 1 and comprises a head with a central axis, a shank connected to the head, and a plurality of threads spirally disposed on the shank. The head includes a top face, a conical underside opposite to the top face, and a plurality of spaced-apart recesses formed on the conical underside. The conical underside has two different inclined surfaces, namely a first inclined surface extending downwards from a periphery of the top face and a second inclined surface located between the first inclined surface and the shank. The spaced-apart recesses are formed on the first inclined surface, each of which has a recessed area gradually reduced downwards from the periphery of the head. Each recess defines a first width adjacent to the top face and a second width adjacent to the second inclined surface. The first width is larger than the second width. A sum of total recessed areas of the recesses is defined from 30 to 37% of a total surface area of the first inclined surface. Further, each thread has from two to six concave surfaces, each of which is curved inward by an angle ranging from 60 to 120 degrees. Any two adjacent concave surfaces meet at a crest. Thus, the concave surfaces and the crests cut and sever fibers of the workpiece into debris more easily and provide a sufficient space for removal of debris. When the head touches the workpiece, the first inclined surface and the recesses with the gradually reduced recessed area help scrape the debris off and accommodate the debris to prevent the surface of the workpiece from being broken or cracked by the debris subjected to the improper pressing force of the head.

Preferably, the recessed area of each recess is reduced from the periphery of the head to a border where the two inclined surfaces meet to form a V shape.

Preferably, a first included angle defined between the first inclined surface and the central axis is larger than a second included angle defined between the second inclined surface and the central axis.

Preferably, the crests of any two adjacent threads are not aligned with each other. Alternatively, the adjacent crests can be aligned with each other.

Preferably, a plurality of teeth can be formed on each of the concave surfaces to facilitate the cutting capability.

The advantages of this invention will be more apparent upon reading following descriptions in conjunction with accompanying drawings.

### BRIEF DESCRIPTION OF THE DRAWINGS

Fig. 1 is a schematic view showing a conventional screw;
Fig. 2 is a schematic view showing another conventional screw;
Fig. 3 is a perspective view showing a first preferred embodiment of this invention;
Fig. 4 is a perspective view showing a second preferred embodiment of this invention;
Fig. 5 is a front elevational view showing a head of this invention;
Fig. 6 is a cross-sectional view showing the first preferred embodiment as seen along the line A-A of Fig. 3;
Fig. 7 is a cross-sectional view showing the first preferred embodiment as seen along the line B-B of Fig. 3;
Fig. 8 is a cross-sectional view showing a variation of Fig. 7;
Fig. 9 is a schematic view showing the first preferred embodiment of this invention which is used for drilling a wooden workpiece;
Fig. 10 is a schematic view showing the first preferred embodiment of this invention which fits flush with the surface of the wooden workpiece;
Fig. 11 is a schematic view showing the first preferred embodiment of this invention which is used for drilling an iron or metal workpiece; and
Fig. 12 is a schematic view showing the structure of Fig. 11 which fits flush with the surface of the iron or metal workpiece.

### DETAILED DESCRIPTION OF THE PREFERRED EMBODIMENTS

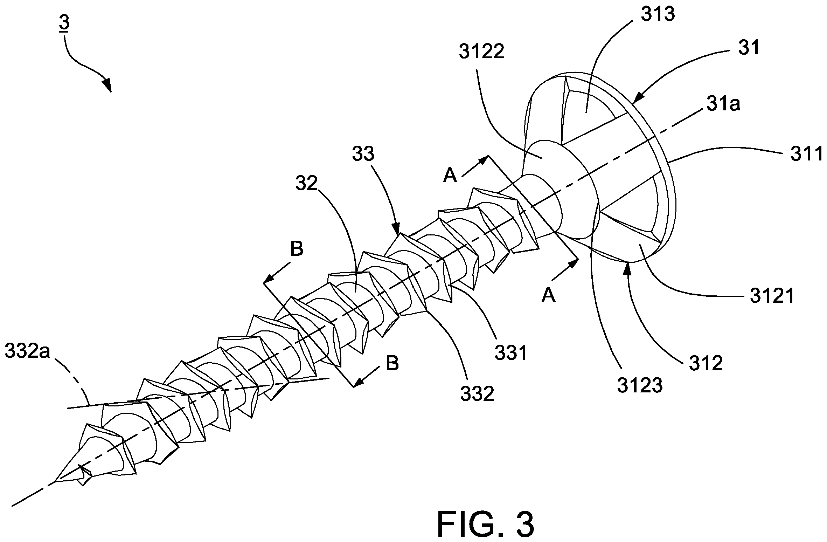

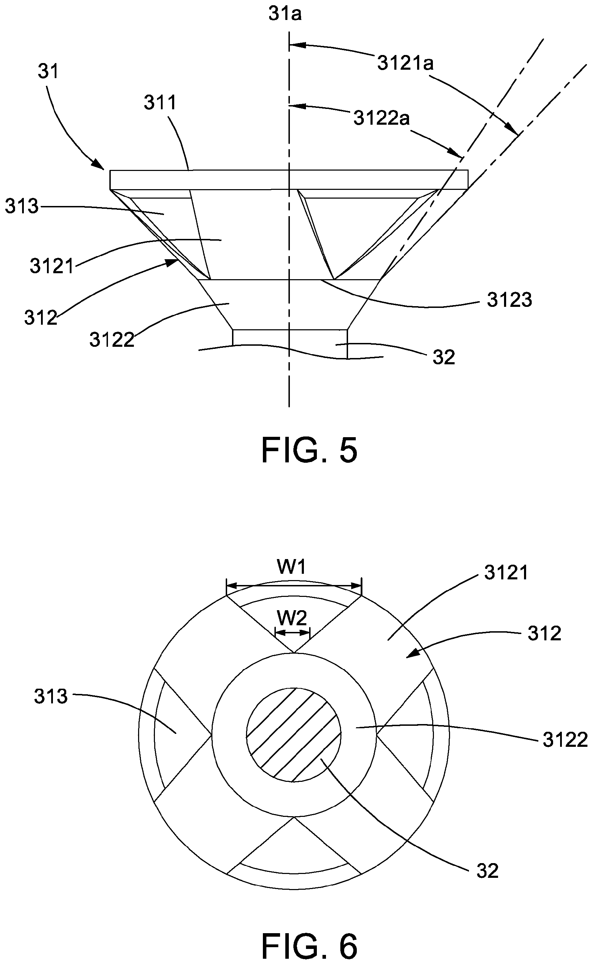

Referring to Fig. **3****,** a screw **3** of a first preferred embodiment of this invention comprises a head **31** defining a central axis **31a,** a shank **32** extending downwards from the head **31,** and a plurality of threads **33** spirally disposed around the shank **32.** The head **31** includes a top face **311,** a conical underside **312** opposite to the top face **311,** and a plurality of spaced-apart recesses **313** formed on the conical underside **312.** The conical underside **312** has a first inclined surface **3121** extending downwards from a periphery of the top face **311** and a second inclined surface **3122** disposed between the first inclined surface **3121** and the shank **32.** The two inclined surfaces **3121, 3122** meets at a border **3123.** The inclined surfaces **3121, 3122** can be inclined with respect to the central axis **31a** of the head **31** by different angles. For example, referring to Fig. **5****,** a first included angle **3121a** defined between the first inclined surface **3121** and the central axis **31a** can be larger than a second included angle **3122a** defined between the second inclined surface **3122** and the central axis **31a,** thereby presenting different slopes on the conical underside **312.**

Referring to Fig. **5** and Fig. **6****,** the recesses **313** are only formed on the first inclined surface **312.** Each of the recesses **313** has a recessed area gradually reduced downwards from the periphery of the head **31** and defines a first width **W1** adjacent to the top face **311** and a second width **W2** adjacent to the second inclined surface **3122.** Of the two widths **W1, W2,** the first width **W1** is larger than the second width **W2** so that the recessed area of the recess **313** can be triangularly contoured to permit a gradual cutting action and facilitate the accommodation of debris. It is noted that the recessed area can be reduced from the periphery to a place close to the border **3123** (not shown) or can be reduced from the periphery to the border **3123** (shown in Fig. **5**). In this preferred embodiment, each recess **313,** reduced from the periphery of the head **31** to the border **3123** to become a V shape, is adopted as an example. In addition, a sum of total recessed areas of the recesses **313** is defined from 30 to 37% of a total surface area of the first inclined surface **3121.** In other words, a smooth conical area, as shown in Fig. **6****,** is left between two adjacent recessed areas or recesses **313,** and a sum of total smooth conical areas is defined from 63 to 70% of the total surface area of the first inclined surface **3121** after deducting the sum of total recessed areas from the total surface area. The use of this invention will be described as follows with the structure of Fig. **3****.**

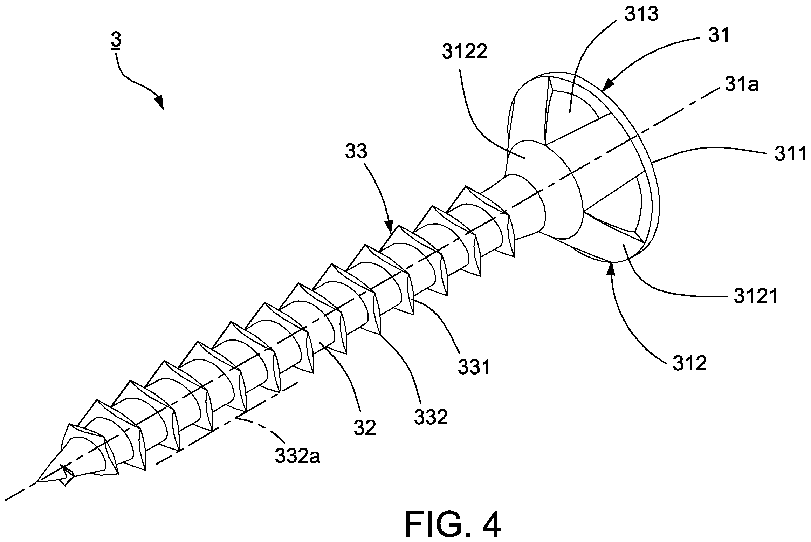

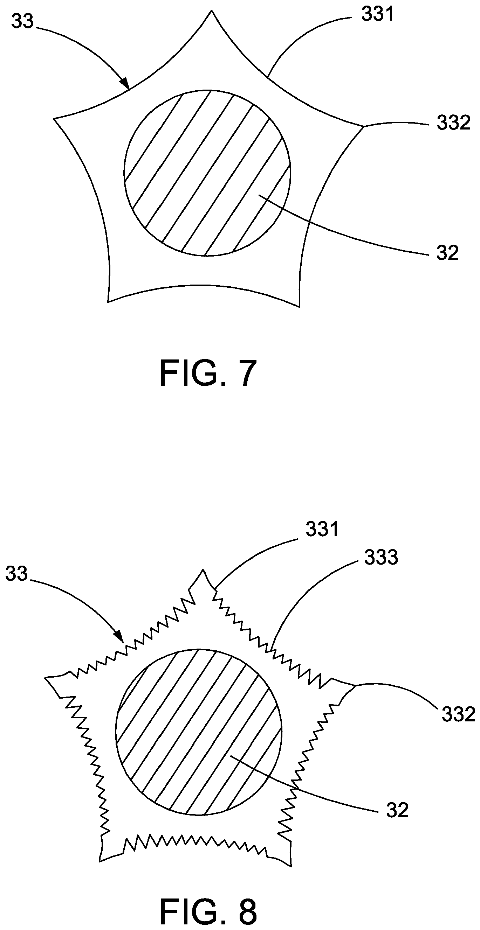

The shank **32** is connected to the second inclined surface **3122,** and the threads **33** are spirally disposed around the shank **32.** Referring to Fig. **7****,** each thread **33** has from two to six concave surfaces **331.** Herein, five concave surfaces **331** are adopted as an example. Each of the concave surfaces **331** is curved inward by an angle ranging from 60 to 120 degrees. Two adjacent concave surfaces **331** meet at a crest **332.** The crests **332** of the adjacent threads **33** are connected to form an imaginary line **332a.** The imaginary line **332a** can be parallel to the central axis **31a** (shown in Fig. **4**) to show that the crests **332** are aligned with each other, or the imaginary line **332a** can be inclined to the central axis **31a** (shown in Fig. **3**) to show that the crests **332** are not aligned with each other. It is also preferable that each concave surface **331** has a plurality of teeth **333** formed thereon to present a serrated edge, as shown in Fig. **8****.**

The operation of the screw **3** is described with the aid of Fig. **3****,** Fig. **5** and Figs. **9****-10.** The screw **3** is adapted to work with a wooden workpiece **4.** When the head **31** is rotated by a tool (not shown), the threads **33** are rotatably driven to make the shank **32** enter the wooden workpiece **4.** Because each thread **33** has multiple crests **332** and concave surfaces **331,** the cooperation of the crests **332** with the concave surfaces **331** helps cut and sever wood fibers of the wooden workpiece **4** into debris to prevent the threads **33** from getting entangled with the fibers. Thus, the increased resistance is prevented. Furthermore, a space is also formed between each concave surface **331** and the wooden workpiece **4** to receive the debris and facilitate the removal of the debris. Thus, the over accumulation of debris impinging on the drilling action of the screw **3** can be prevented, and a quick drilling speed and a labor-saving effect can also be obtained.

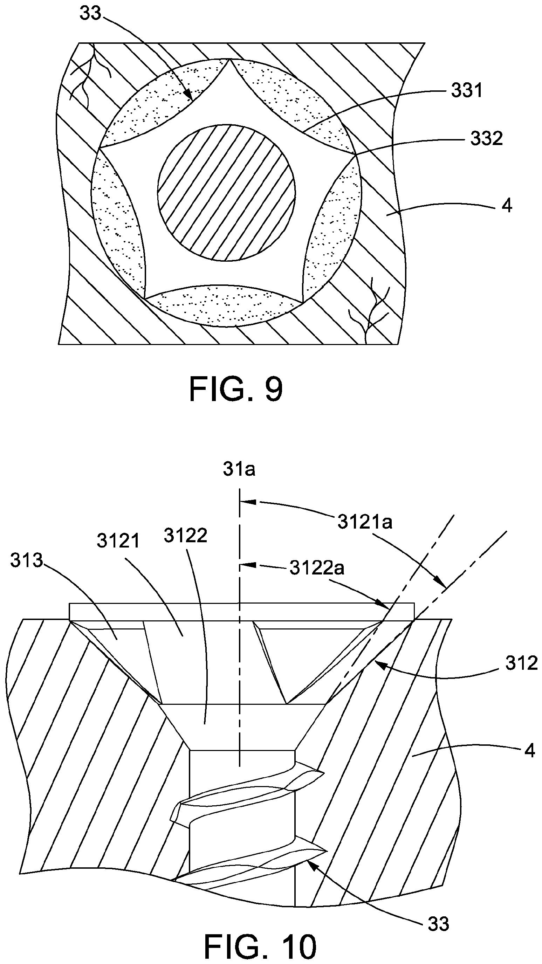

Further referring to Fig. **10****,** when the conical underside **312** touches the wooden workpiece **4,** the second inclined surface **3122** can follow the shank **32** quickly because of its smaller included angle **3122a** and enter the wooden workpiece **4** easily. The wooden workpiece **4** then touches the first inclined surface **3121.** When the wooden workpiece **4** meets the first inclined surface **3121,** the smooth conical areas and the triangularly-contoured recesses **313** (or recessed areas) which are different in height allow the first inclined surface **3121** to pull and scrape off the debris. Concurrently, the first inclined surface **3121** with the larger included angle **3121a** which forms a gradient different from the gradient of the second inclined surface **3122** also helps pull and scrape the debris off under the rotating force, thereby providing a better cutting and scraping effect. Thus, a certain amount of scraped debris can be accommodated in the recesses **313** to prevent the wood crack caused by the debris which is improperly pressed by the head **31** and over accumulated. The smooth conical areas occupying from 63 to 70% of the total surface area of the first inclined surface **3121** are also in close contact with the surface of the wooden workpiece **4** to attain a stable positioning effect.

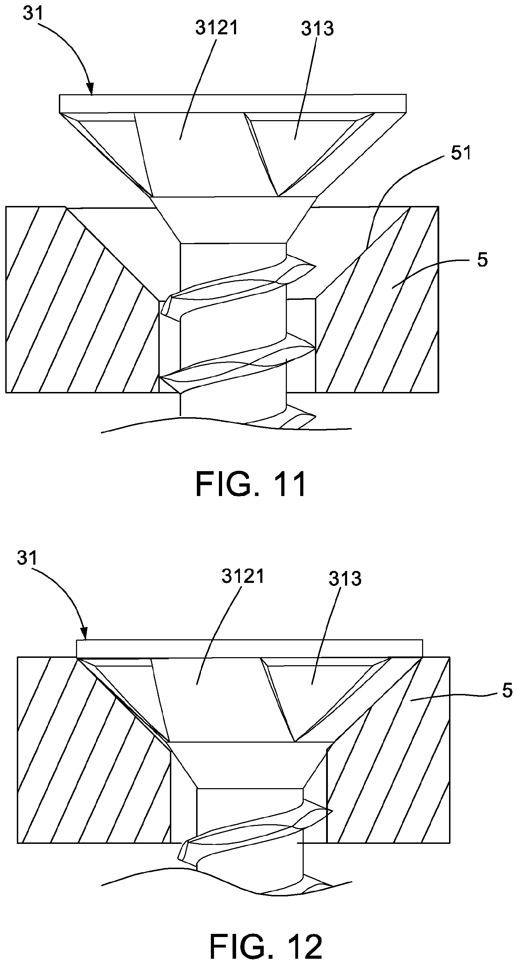

Referring to Fig. **11** and Fig. **12****,** the screw **3** is adapted to work with an iron or metal workpiece **5** having a bowl-shaped pre-drilled hole **51.** When the head **31** enters the pre-drilled hole **51,** the smooth conical areas occupying from 63 to 70% of the total surface area of the first inclined surface **3121** are in close contact with the pre-drilled hole **51** and fit flush therewith. Thus, the better stability for positioning the screw **3** is attained.

To sum up, this invention takes advantages of concave surfaces and crests of each thread to cut wood fibers into debris easily and provide a space for removal of debris. The smooth and recessed areas of the first inclined surface of the head further scrape the debris off and receive the debris when the head touches the workpiece. Thus, the above combination prevents the workpiece surface from having cracks or splits made by the debris which is improperly pressed by the head. This invention can also be adapted to a workpiece with a pre-drilled hole. Thus, a stable fastening effect is obtained.

While the embodiments of this invention are shown and described, it is understood that further variations and modifications may be made without departing from the scope of this invention.

## Claims

1. A screw (3) comprising a head (31) defining a central axis (31a), a shank (32) extending downwards from said head (31), and a plurality of threads (33) spirally disposed around said shank (32);
said head (31) includes a top face (311), a conical underside (312) opposite to said top face (311), and a plurality of spaced-apart recesses (313) formed on said conical underside (312), said conical underside (312) having a first inclined surface (3121) extending downwards from a periphery of said top face (311) and a second inclined surface (3122) connected between said first inclined surface (3121) and said shank (32), said recesses (313) being formed on said first inclined surface (3121), each of said recesses (313) having a recessed area gradually reduced downwards from said periphery of said top face (311), each of said recesses (313) defining a first width (W1) adjacent to said top face (311) and a second width (W2) adjacent to said second inclined surface (3122), said first width (W1) being larger than said second width (W2),
**characterized in that** a sum of total recessed areas of said recesses (313) is defined from 30 to 37% of a total surface area of said first inclined surface (3121), a smooth conical area being left between two adjacent recessed areas (313), a sum of total smooth conical areas being defined from 63 to 70% of said total surface area of said first inclined surface (3121) after deducting the sum of said total recessed areas from said total surface area, each of said threads (33) having from two to six concave surfaces (331), each of said concave surfaces (331) being curved inward by an angle ranging from 60 to 120 degrees, each concave surface (331) and each adjacent concave surface (331) meeting at a crest (332) .

2. The screw (3) according to claim 1, wherein a first included angle (3121a) defined between said first inclined surface (3121) and said central axis (31a) is larger than a second included angle (3122a) defined between said second inclined surface (3122) and said central axis (31a).

3. The screw (3) according to claim 1, wherein said recessed area is reduced from said periphery of said top face (311) to a border (3123) where said first inclined surface (3121) and said second inclined surface (3122) meet.

4. The screw (3) according to any of claims 1 to 3, wherein said crests (332) of any two adjacent threads (33) are not aligned with each other.

5. The screw (3) according to any of claims 1 to 3, wherein said crests (332) of any two adjacent threads (33) are aligned with each other.

6. The screw (3) according to any of claims 1 to 3, wherein each of said threads (31) has a plurality of teeth (333) formed on each of said concave surfaces (331).

## Patentansprüche

1. Schraube (3) mit einem Kopf (31), der eine mittlere Achse (31a) definiert, wobei ein Schaft (32) von besagtem Kopf (31) nach unten verläuft, und ein Gewinde (33) in einer Spirale um den Schaft (32) angeordnet ist;
der Kopf (31) umfasst eine Oberseite (311), eine konische Unterseite (312) gegenüber der Oberseite (311) und eine Vielzahl von beabstandeten Vertiefungen (313) auf der konischen Unterseite (312), wobei die konische Unterseite (312) eine erste geneigte Oberfläche (3121) umfasst, die von einem Umfang der Oberseite (311) nach unten verläuft, und eine zweite geneigte Oberfläche (3122), die zwischen der ersten geneigten Oberfläche (3121) und dem Schaft (32) verbunden ist, wobei die Vertiefungen (313) auf der ersten geneigten Oberfläche (3121) gebildet sind und jede der Vertiefungen (313) einen vertieften Bereich umfasst, der sich von dem Umfang der Oberseite (311) allmählich nach unten verringert, wobei jede der Vertiefungen (313) eine erste Breite (W1) angrenzend an die Oberseite (311) und eine zweite Breite (W2) angrenzend an die zweite geneigte Oberfläche (3122) definierend, wobei die erste Breite (W1) größer als die zweite Breite (W2) ist,
**gekennzeichnet dadurch, dass** eine Summe von gesamten vertieften Bereichen der Vertiefungen (313) als 30 bis 37% einer Gesamtfläche der ersten geneigten Oberfläche (3121) definiert wird, wobei ein glatter konischer Bereich zwischen zwei benachbarten vertieften Bereichen (313) gelassen wird, wobei eine Summe von gesamten glatten konischen Bereichen von 63 bis 70% der Gesamtfläche der ersten geneigten Oberfläche (3121) nach Abzug der Summe der gesamten vertieften Bereiche der Gesamtfläche definiert wird, wobei jedes Gewinde (33) zwei bis sechs konkave Oberflächen (331) hat und jede der konkaven Oberflächen (331) in einem Winkel von 60 bis 120 Grad nach innen gebogen ist und jede konkave Oberfläche (331) und jede benachbarte konkave Oberfläche (331) sich an einer Spitze (332) treffen.

2. Schraube (3) nach Anspruch 1, wobei ein erster Winkel (3121a) zwischen der ersten geneigten Oberfläche (3121) und der mittleren Achse (31a) größer ist als ein zweiter Winkel (3122a) zwischen der zweiten geneigten Oberfläche (3122) und der mittleren Achse (31a).

3. Schraube (3) nach Anspruch 1, wobei der vertiefte Bereich von dem Umfang der Oberseite (311) zu einem Rand (3123) hin abnimmt, wo die erste geneigte Oberfläche (3121) und die zweite geneigte Oberfläche (3122) sich treffen.

4. Schraube (3) nach einem beliebigen der Ansprüche 1 bis 3, wobei die Spitzen (332) von beliebigen zwei benachbarten Gewinden (33) nicht miteinander ausgerichtet sind.

5. Schraube (3) nach einem beliebigen der Ansprüche 1 bis 3, wobei die Spitzen (332) von beliebigen zwei benachbarten Gewinden (33) miteinander ausgerichtet sind.

6. Schraube (3) nach einem beliebigen der Ansprüche 1 bis 3, wobei jedes der Gewinde (31) eine Vielzahl von Zähnen (333) hat, die auf jeder der konkaven Oberflächen (331) gebildet sind.

## Revendications

1. Vis (3) comprenant une tête (31) définissant un axe central (31a), une tige (32) s'étendant vers le bas à partir de ladite tête (31), et une pluralité de filets (33) disposés en spirale autour de ladite tige (32) ;
ladite tête (31) comprend une face supérieure (311), une face inférieure conique (312) opposée à ladite face supérieure (311), et une pluralité d'évidements espacés (313) formés sur ladite face inférieure conique (312), ladite face inférieure conique (312) ayant une première surface inclinée (3121) s'étendant vers le bas à partir d'une périphérie de ladite face supérieure (311) et une seconde surface inclinée (3122) reliée entre ladite première surface inclinée (3121) et ladite tige (32), lesdits évidements (313) étant formés sur ladite première surface inclinée (3121), chacun desdits évidements (313) ayant une zone renfoncée diminuant progressivement vers le bas à partir de ladite périphérie de ladite face supérieure (311), chacun desdits évidements (313) définissant une première largeur (W1) adjacente à ladite face supérieure (311) et une seconde largeur (W2) adjacente à ladite seconde surface inclinée (3122), ladite première largeur (W1) étant plus grande que ladite seconde largeur (W2),
**caractérisée par le fait qu'**une somme des zones renfoncées totales desdits évidements (313) est définie de 30 à 37 % d'une aire de surface totale de ladite première surface inclinée (3121), une zone conique lisse étant laissée entre deux zones renfoncées adjacentes (313), une somme des zones coniques lisses totales étant définie de 63 à 70 % de ladite aire de surface totale de ladite première surface inclinée (3121) après soustraction de la somme desdites zones renfoncées totales à ladite aire de surface totale, chacun desdits filets (33) ayant de deux à six surfaces concaves (331), chacune desdites surfaces concaves (331) étant incurvée vers l'intérieur d'un angle compris dans la plage allant de 60 à 120 degrés, chaque surface concave (331) et chaque surface concave adjacente (331) se rencontrant à une crête (332).

2. Vis (3) selon la revendication 1, dans laquelle un premier angle inclus (3121a) défini entre ladite première surface inclinée (3121) et ledit axe central (31a) est supérieur à un second angle inclus (3122a) défini entre ladite seconde surface inclinée (3122) et ledit axe central (31a).

3. Vis (3) selon la revendication 1, dans laquelle ladite zone renfoncée diminue de ladite périphérie de ladite face supérieure (311) à un bord (3123) où ladite première surface inclinée (3121) et ladite seconde surface inclinée (3122) se rencontrent.

4. Vis (3) selon l'une quelconque des revendications 1 à 3, dans laquelle lesdites crêtes (332) de toute paire de filets adjacents (33) ne sont pas alignées l'une avec l'autre.

5. Vis (3) selon l'une quelconque des revendications 1 à 3, dans laquelle lesdites crêtes (332) de toute paire de filets adjacents (33) sont alignées l'une avec l'autre.

6. Vis (3) selon l'une quelconque des revendications 1 à 3, dans laquelle chacun desdits filets (31) a une pluralité de dents (333) formées sur chacune desdites surfaces concaves (331).
